# EUROPÄISCHE PATENTSCHRIFT

(11) **EP 2 859 049 B1**
(45) Veröffentlichungstag und Bekanntmachung des Hinweises auf die Patenterteilung: **09.08.2017**
(21) Anmeldenummer: 13734951.0
(22) Anmeldetag: 12.06.2013
(51) Int. Cl.: C08L 95/00

(54) **VERFAHREN ZUR HERSTELLUNG EINER ABDICHTUNG VON FAHRBAHNEN**
METHOD FOR PRODUCING A SEALING FOR ROADWAYS
PROCÉDÉ POUR RÉALISER UNE ÉTANCHÉITÉ DE CHAUSSÉES

(30) Priorität: 12.06.2012 AT 6772012
(43) Veröffentlichungstag der Anmeldung: 15.04.2015
(73) Patentinhaber: Rojek, Helmut, 1220 Wien (AT); Woschitz, Richard, 7000 Eisenstadt (AT)
(72) Erfinder: Rojek, Helmut, 1220 Wien (AT); Woschitz, Richard, 7000 Eisenstadt (AT)
(74) Vertreter: Keschmann, Marc
(86) Internationale Anmeldenummer: PCT/AT2013/000099
(87) Internationale Veröffentlichungsnummer: WO 2013/185156

(56) Entgegenhaltungen:
- EP-A1- 2 192 233
- EP-A1- 2 281 948
- EP-A2- 0 199 371
- AT-B- 413 990
- DE-U1-202004 008 319

## Beschreibung

Die Erfindung betrifft ein Verfahren zur Herstellung einer Abdichtung von Fahrbahnen z.B. auf Brücken oder Garagen für die nachfolgende Aufbringung einer Trag-, Deck- oder Verschleißschicht eines Straßenaufbaus, bei dem der abzudichtende Unterbau grundiert und je nach Umstand mit Quarzsand abgestreut wird. Darauf wird eine Spritzelastomer-Beschichtung aufgespritzt, auf welche anschließend ein Haftprimer aufgebracht wird. Dieser wird mit einem Kunststoffgranulat vollflächig abgestreut. Darauf wird die Trag-, Deck- oder Verschleißschicht heiß aufgebracht.

Ein solches Verfahren ist beispielsweise aus der Patentschrift AT 413990 B bekannt geworden. Die dort beschriebene Spritzelastomer-Beschichtung besteht aus einer aufgespritzten Folie auf Polyurethan-Basis. Der dort beschriebene Haftprimer ist auf Polyurethan-Basis ausgebildet, wobei ein modifiziertes Polyetherpolyol in Verbindung mit einem formulierten Isozyanat als besonders bevorzugt beschrieben ist. Das in der AT 413990 B beschriebene Kunststoffgranulat auf Basis eines synthetischen Harzes ist ein modifiziertes thermoplastisches Polyolefin.

Der eingangs beschriebene Schichtaufbau dient dazu, Fahrbahnen, vor allem im Bereich von Brücken oder Garagen abzudichten, um den darunterliegenden Unterbau (das darunterliegende Bauwerk) dauerhaft vor Nässe, Auftau-Chemikalien und den mit dem Stra-ßenverkehr verbundenen sonstigen, auch chemischen, Einwirkungen zu schützen und zugleich den über den Abdichtungsschichten liegenden Straßenaufbau fest und dauerhaft mit dem Unterbau zu verbinden.

Die Abdichtung wird hierbei insbesondere durch die Spritzelastomer-Beschichtung erreicht. Auf diese Spritzelastomer-Beschichtung wird unter Vermittlung eines Klebeprimers ein Kunststoffgranulat vollflächig aufgebracht und fixiert, was sicherstellen soll, dass die darauf aufgebrachte Trag-, Deck- oder Verschleißschicht des Straßenaufbaus, bestehend z.B. aus Asphalt, dauerhaft und fest mit der Abdichtung verbunden wird. Die Schub- und Haftzugfestigkeit wird dabei vor allem durch das Verschmelzen der heiß aufgebrachten Trag-, Deck- oder Verschleißschicht mit den auf der Abdichtung haftenden Kunststoffgranulaten erreicht. Aus dem miteinander verschmelzenden Materialien der Trag-, Deck- oder Verschleißschicht und dem Kunststoffgranulat soll ein weitgehend monolithischer Körper entstehen, der die erforderliche Stabilität sicherstellen soll.

Dabei treten folgende Probleme auf:
1. Das Problem der zu geringen Temperatur des heiß aufzubringenden Materials für die Trag-, Deck- oder Verschleißschicht:
   Der häufig verwendete Asphalt etwa verlässt das Werk in der Regel mit einer Temperatur von ca. 180°C, kühlt aber bis zum Ausbringen mit dem Asphaltfertiger unter Umständen auf eine Temperatur von nur ca. 120°C ab. Eine niedrige Temperatur des aufgebrachten Heißguts (Asphalt oder anderes) kann dazu führen, dass das Kunststoffgranulat nicht mehr ausreichend mit der darunterliegenden Fläche (Primer) und/oder dem aufgebrachten Heißgut verschmilzt.
2. Das Problem der wegen starker witterungsbedingter Erwärmung des Fahrbahnbelags einzuhaltenden Mindesterweichungstemperatur des Granulats.
   Die Erweichungstemperatur des Kunststoffgranulats kann durch Wahl eines geeigneten Kunststoffes beeinflusst werden. Ein Material mit relativ niedriger Erweichungstemperatur ist aber nicht geeignet, weil die Gefahr besteht, dass das Material des (geschmolzenen) Granulats schon bei witterungsbedingter Erhitzung (Sonnenbestrahlung) der fertigen Fahrbahn zu weich wird. Das Material muss auch nach dem Einbau bis zu Temperaturen von ca. 100 °C stabil bleiben, weil sich Fahrbahnen bei Sonneneinstrahlung stark aufheizen.
3. Das Problem der ausreichenden Haftung des Kunststoffgranulats auf dem Primer während des Einbaus.

Ein weiteres Problem besteht darin, dass das Kunststoffgranulat nicht gut genug auf dem Haftprimer haftet. Das führt dazu, dass es beim Befahren der mit Kunststoffgranulat belegten Fahrbahn mit schweren Arbeitsmaschinen beim Einbau, vor allem beim Überfahren mit dem Asphaltfertiger, wegen der dabei auftretenden Verschubkräfte zu einem Lösen und Verschieben des Kunststoffgranulats kommt bevor die Trag-, Deck- oder Verschleißschicht aufgebracht wurde.

Die beschriebenen Probleme führen, wenn
- die Temperatur des aufgebrachten Materials herabgesetzt ist und das Granulat und/oder der Primer mit dem aufgebrachten Material für die Trag-, Deck- oder Verschleißschicht nicht oder nicht ausreichend verschmilzt; oder
- das Kunststoffgranulat beim Einbau, vor allem beim Befahren mit Arbeitsmaschinen verschoben und/oder vertragen wurde, vor allem wenn deshalb bei Aufbringung des Materials für die Trag-, Deck- oder Verschleißschicht an manchen Stellen zu wenig oder zu viel Granulat vorhanden ist und das Granulat und/oder der Primer mit dem aufgebrachten Material für die Trag-, Deck- oder Verschleißschicht nicht oder nicht ausreichend verschmilzt, dazu,
dass die für den Straßenverkehr erforderlichen Schub- und Haftzugfestigkeiten schon beim Einbau nicht immer oder danach nicht dauerhaft erreicht werden können; ferner wenn
- das für das Kunststoffgranulat verwendete Material wegen eines niedrigen Erweichungspunkts bei starker Erwärmung der Fahrbahn nach Einbau an Festigkeit verliert, zusätzlich dazu,
dass bei (witterungsbedingter) Erhitzung der Fahrbahn die für den Straßenverkehr erforderlichen Schub- und Haftzugfestigkeiten unterschritten werden können.
Die dauerhafte und sichere Schub- und Haftzugsfestigkeit ist insbesondere im Bereich von Gefälle- oder Bremsstrecken von Fahrbahnen, bei geneigten Kurven oder bei Dilationsfugen von hoher Relevanz.
Die vorliegende Erfindung zielt daher darauf ab, ein Verfahren zu schaffen, mit dem die oben beschriebenen Probleme zumindest teilweise gelöst werden. Insbesondere zielt die Erfindung darauf ab, eine überaus feste, dauerhafte und dauerhaft belastbare Verbindung des Kunststoffgranulats mit der Spritzelastomer-Beschichtung und/oder, dem Haftprimer einerseits und der Trag-, Deck- oder Verschleißschicht des Straßenaufbaus mit dem Kunststoffgranulat und/oder. dem darunterliegenden Aufbau andererseits zu erreichen. Dies wird durch ein Verfahren gemäß Anspruch 1 erreicht. Zur Erreichung dieses Ziels ist das Verfahren der eingangs genannten Art erfindungsgemäß im Wesentlichen derart weitergebildet, dass als Haftprimer ein Epoxidharz zum Einsatz gelangt und dass auf das Kunststoffgranulat eine Bitumenemulsion oder eine Bitumen-Latex-Emulsion aufgebracht wird. Durch die Verwendung von Epoxidharz wird die Haftung des Kunststoffgranulats auf dem Untergrund, d.h. auf der Spritzelastomer-Beschichtung wesentlich verbessert. Das Aufbringen der Bitumenemulsion oder Bitumen-Latex-Emulsion führt dazu, dass das Kunststoffgranulat verfestigt und stabilisiert wird, wobei sich eine kunstharzvergütete Kleberschicht ergibt, die sich hervorragend mit der Trag-, Deck- oder Verschleißschicht des Straßenaufbaus verbindet. Nach der Verbindung mit der Trag-, Deck- oder Verschleißschicht ergibt sich ein ähnlicher Effekt wie bei der Verwendung von kunstharzvergütetem Bitumen. Ein weiterer Vorteil der Aufbringung der Bitumenemulsion bzw. der Bitumen-Latex-Emulsion liegt darin, dass die beim Aufbringen flüssige Emulsion die Zwischenräume zwischen den Kunststoffgranulaten und der darunterliegenden, mit dem Primer beschichteten Fläche und die Zwischenräume zwischen den einzelnen Kunststoffgranulaten selbst teilweise auffüllt. Dadurch wird eine besonders vollflächige und wirksame Verbindung des später schmelzenden Granulats mit dem Primer erreicht. Zugleich bewirkt die flüssige Bitumenemulsion bzw. Bitumen-Latex-Emulsion, dass das Schmelzgut (Kunststoffgranulat und Emulsion) beim Aufbringen besonders tief in die körnige Substanz der unregelmäßigen Oberfläche des aufgebrachten Heißguts der Trag-, Deck- oder Verschleißschicht eindringt. Dadurch wird die Kontakt- und Klebefläche mit der aufgebrachten Trag-, Deck- oder Verschleißschicht wesentlich vergrößert und die Verbindung und Haftung mit der Trag-, Deck- oder Verschleißschicht wesentlich verbessert.

Unter einer Bitumen-Latex-Emulsion ist eine kolloidale Mischung aus Straßenbaubitumen, Latex und Wasser zu verstehen. Bevorzugt kommt im Rahmen der Erfindung eine stabile Emulsion zum Einsatz. Die Menge der aufzutragenden Bitumenemulsion bzw. Bitumen-Latex-Emulsion hängt unter anderem von der Korngröße des in der Trag-, Deck- oder Verschleißschicht des Straßenaufbaus enthaltenen Zuschlagstoffs ab. Je gröber die Körner des Zuschlagsstoffs sind, desto mehr Emulsion und Kunststoffgranulat ist erforderlich, weil größere Körner auch größere Zwischenräume bilden, die vom Schmelzgut ausgefüllt werden können. Im Rahmen des erfindungsgemäßen Verfahrens wird bevorzugt so vorgegangen, dass die Bitumenemulsion bzw. Bitumen-Latex-Emulsion in Mengen von 600 - 1000 gr/m², insbesondere 750 - 850 gr/m², vorzugsweise durch Aufspritzen im Hochdruckverfahren aufgebracht wird.

Die sich aus der Verbindung der Bitumenemulsion bzw. Bitumen-Latex-Emulsion mit dem Kunststoffgranulat ergebende Klebeschicht führt weiters in überaus vorteilhafter Weise zu einem besseren und zusätzlichen Schutz der Spritzelastomer-Beschichtung vor Wasser und Chemikalien. Herkömmliche Spritzelastomer-Beschichtungen haben eine Wasseraufnahmekapazität von ca. 3-5%. Fahrbahnabdichtungen der hier beschriebenen Art sind für eine Nutzungsdauer von mindestens 20 Jahren ausgelegt. Wenn die oberhalb der Spritzelastomer-Beschichtung angeordneten Schichten wasserdurchlässig sind, dringt im Laufe der Jahre eine solche Menge Wasser zur Spritzelastomer-Beschichtung durch, dass deren maximale Wasseraufnahmekapazität ausgenutzt und die entsprechende Menge in die Beschichtung eindringt. Dadurch kommt das darunter liegende Bauwerk trotz Spritzelastomer-Beschichtung notwendigerweise mit Wasser in Kontakt. Wenn die Fahrbahnabdichtung mit Salzwasser oder sonstigen Auftau- oder im Straßenverkehr auftretenden Chemikalien belastet wird, was bei Fahrbahnen insbesondere bei der im Winter erforderlichen Salz- oder Taumittelstreuung häufig der Fall ist, besteht zusätzlich die Gefahr, dass die Salze oder Chemikalien in die Werkstoffmatrix der Spritzelastomer-Beschichtung eindringen und dort kristallisieren. Das führt wegen der bei der Kristallisierung erfolgenden Volumenzunahme zu einem Aufweiten der Poren der Spritzelastomer-Beschichtung, die wiederum deren Wasseraufnahme und die sich in der Folge dort ansammelnde Wassermenge erhöht, die wiederum die Kristallisierung der Salze und Chemikalien, die Aufweitung der Poren und die weitere Wasseraufnahme in einem fortwährenden Kreislauf beschleunigt. Demgegenüber bildet die sich bei der vorliegenden Erfindung aus der Verbindung der Bitumenemulsion bzw. Bitumen-Latex-Emulsion mit dem Kunststoffgranulat ergebende Klebeschicht auch eine zusätzliche Wassersperre aus, welche die Menge des zur Spritzelastomer-Beschichtung von oben durchdringenden Wassers minimiert. Dadurch kann die von der Spritzelastomer-Beschichtung insgesamt aufgenommene Wassermenge über viele Jahre sehr gering gehalten werden.

Die Wasseraufnahme kann bevorzugt noch dadurch verringert werden, dass als Spritzelastomer-Beschichtung eine Polyurea-Spritzbeschichtung verwendet wird. Die Polyurea-Spritzbeschichtung weist materialbedingt eine Wasseraufnahmekapazität von nur 0,3 - 1,5 % auf. Polyurea beinhaltet keinen Katalysator und ist daher sehr feuchtigkeitsresistent. Darüber hinaus zeichnet sich Polyurea dadurch aus, dass es auch bei niedrigen Temperaturen besser am Untergrund haftet und auch bei niedrigen Untergrundtemperaturen und erhöhter Luftfeuchtigkeit völlig aushärtet. Polyurea ist daher wetterunabhängiger einsetzbar als herkömmliche Polyurethan-Beschichtungen und lässt Verarbeitungstemperaturen von -10 bis 60°C zu.

Die Polyurea-Spritzbeschichtung wird bevorzugt in einer Schichtstärke von 2 - 3 mm aufgebracht. Insbesondere wird die Polyurea-Spritzbeschichtung in einer Menge von 2,5 - 3 kg/m² aufgebracht.

Mit Vorteil erfolgt die Aufbringung der Polyurea-Spritzbeschichtung bei 65 - 85°C und insbesondere mittels eines Hochdruckspritzverfahrens bei 140 - 210 bar.

Bevorzugt umfasst die Grundierung Epoxidharz oder Polyaspartic, bevorzugt in einer Menge von 500 - 800 gr/m². Dadurch wird eine gute Haftung der Spritzelastomer-Beschichtung am Untergrund, insbesondere am Beton des Bauwerks, insbesondere der Brücke gewährleistet. Die Grundierung kann im Bedarfsfall mehrlagig aufgebracht werden. Die Haftung wird durch die Betreuung mit Quarzsand noch weiter erhöht, wobei bevorzugt feuergetrockneter Quarzsand zum Einsatz gelangt. Die Bestreuung mit Quarzsand erfolgt insbesondere dann, wenn die Rauheit des Untergrunds nicht ausreichend ist.

Der Haftprimer, nämlich das Epoxidharz wird bevorzugt in einer Menge von 400 - 500 gr/m² aufgebracht.

Das Kunststoffgranulat stellt wie oben beschrieben gemeinsam mit der Bitumenemulsion bzw. der Bitumen-Latex-Emulsion eine Verbindungsschicht zwischen der Spritzelastomer-Beschichtung und der darüber liegenden Trag-, Deck- oder Verschleißschicht des Straßenaufbaus her, wobei die Emulsion das Kunststoffgranulat an den Kontaktflächen, vor allem mit dem mit Primer beschichteten Untergrund aufschmilzt. Die darauf aufgebrachte Trag-, Deck- oder Verschleißschicht, bei der es sich bevorzugt um eine Asphaltschicht oder ein vergleichbares Heißgutgemisch handelt, schmilzt die Verbindungsschicht (Kunststoffgranulat und Emulsion) so auf, dass sie tief in die Zwischenräume der unregelmäßigen Oberfläche der aufgebrachten Trag-, Deck- oder Verschleißschicht eindringt. Dabei entsteht zwischen der Verbindungsschicht (Kunststoffgranulat und Emulsion) und der darauf aufgebrachten Trag-, Deck- oder Verschleißschicht ein überaus stabiler und verschubfester monolithischer Körper.

Die Kunststoffgranulate weisen zu diesem Zweck bevorzugt eine Erweichungstemperatur von 125 - 140 °C auf. Als Kunststoffgranulat gelangen bevorzugt extrudierte Polyolefine zum Einsatz, bevorzugt in Mengen von 600 - 1000 gr/m². Dabei handelt es sich beispielsweise um Kunststoffgranulat aus Polyethylen oder Polypropylen. Die Kunststoffgranulate weisen mit Vorteil einen Durchmesser von 3 - 6 mm auf, wobei der Durchmesser von der Korngröße des in der darauf aufzubringenden Trag-, Deck- oder Verschleißschicht enthaltenen Zuschlagsstoffes abhängt. Je höher die Korngröße des Zuschlagsstoffes ist, desto größer sollte der Durchmesser der Kunststoffgranulate gewählt sein.

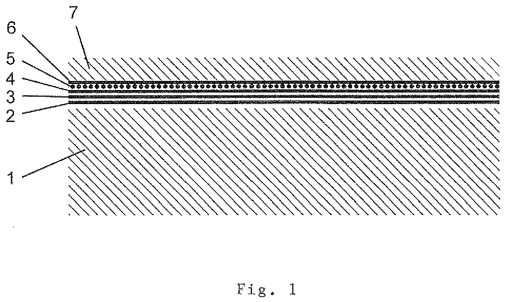

Die Erfindung wird nachfolgend anhand eines in der Zeichnung schematisch dargestellten Ausführungsbeispiels näher erläutert.

Auf einen entsprechend vorbehandelten Unterbau 1 wird eine zweilagige Grundierung bzw. Versiegelung 2 auf Basis eines Epoxidharzes aufgebracht. Die zweite Schicht dieser Grundierung wird je nach Umständen mit Quarzsand abgestreut. Anschließend wird als Spritzelastomer eine (oder hybride) Polyurea-Beschichtung 3 heiß aufgespritzt, wobei diese Beschichtung die eigentliche Versiegelungsschicht bildet.

Auf diese Beschichtung 3 wird vollflächig ein Haftprimer 4 auf Epoxidharz-Basis aufgebracht. Dieser wird anschließend mit einem Kunststoffgranulat 5 vollflächig abgestreut. Danach wird eine Bitumen-Emulsion oder eine Bitumen-Latex-Emulsion 6 aufgebracht, wodurch das Kunststoffgranulat stabilisiert und verfestigt wird und genügend Klebemasse vorhanden ist, um eine dauerhafte und sichere Verbindung mit der darauf aufzubringenden Schicht (Trag-, Deck- oder Verschleißschicht). Schließlich wird eine Trag-, Deck- oder Verschleißschicht (etwa Asphaltschicht) 7 aufgebracht. Der auf diese Weise hergestellte Schichtaufbau (Schubverbund) kann ohne weiteres mit schweren Baufahrzeugen, insbesondere mit Asphaltfertigern befahren werden ohne dass es zu einem Verschub oder Lösen der einzelnen Schichten, insbesondere des Kunststoffgranulats kommt. Der Schichtaufbau (Schubverbund) bleibt auch bei starker Bauteilerwärmung (etwa durch Sonneneinstrahlung) stabil.

## Patentansprüche

1. Verfahren zur Herstellung einer Abdichtung von Fahrbahnen z.B. auf Brücken für die nachfolgende Aufbringung einer Trag-, Deck- oder Verschleißschicht (7) eines Straßenaufbaus, bei dem die Fahrbahn grundiert (2) und ggf. mit Quarzsand abgestreut wird, worauf eine Spritzelastomer-Beschichtung (3) aufgespritzt wird, anschließend ein Haftprimer (4) aufgebracht und dieser mit einem Kunststoffgranulat (5) vollflächig abgestreut wird, **dadurch gekennzeichnet, dass** als Haftprimer (4) ein Epoxidharz zum Einsatz gelangt und dass auf das Kunststoffgranulat (5) eine Bitumenemulsion oder Bitumen-Latex-Emulsion (6) aufgebracht wird.

2. Verfahren nach Anspruch 1, **dadurch gekennzeichnet, dass** als Spritzelastomer-Beschichtung (3) eine Polyurea- oder Polyureahybrid-Spritzbeschichtung verwendet wird.

3. Verfahren nach Anspruch 1 oder 2, **dadurch gekennzeichnet, dass** die Grundierung (2) ein Epoxidharz oder Polyaspartic umfasst, bevorzugt in einer Menge von 500 - 800 gr/m².

4. Verfahren nach Anspruch 2 oder 3, **dadurch gekennzeichnet, dass** die Polyurea- oder Polyureahybrid-Spritzbeschichtung (3) in einer Schichtstärke von 2 - 3 mm aufgebracht wird.

5. Verfahren nach Anspruch 2, 3 oder 4, **dadurch gekennzeichnet, dass** die Polyurea- oder Polyureahybrid-Spritzbeschichtung (3) in einer Menge von 2,8 - 3 kg/m² aufgebracht wird.

6. Verfahren nach einem der Ansprüche 2 bis 5, **dadurch gekennzeichnet, dass** die Aufbringung der Polyurea- oder Polyureahybrid-Spritzbeschichtung (3) bei 65 - 85°C und insbesondere mittels eines Hochdruckspritzverfahrens bei 140 - 210 bar erfolgt.

7. Verfahren nach einem der Ansprüche 1 bis 6, **dadurch gekennzeichnet, dass** der Haftprimer (4) in einer Menge von 400 - 500 gr/m² aufgebracht wird.

8. Verfahren nach einem der Ansprüche 1 bis 7, **dadurch gekennzeichnet, dass** als Kunststoffgranulat (5) extrudierte Polyolefine zum Einsatz gelangen, bevorzugt in Mengen von 600 - 1000 gr/m².

9. Verfahren nach Anspruch 1 bis 8, **dadurch gekennzeichnet, dass** die Kunststoffgranulate (5) eine Erweichungstemperatur von 125 - 140 °C aufweisen.

10. Verfahren nach einem der Ansprüche 1 bis 9, **dadurch gekennzeichnet, dass** die Kunststoffgranulate (5) einen Durchmesser 3 - 6 mm aufweisen.

11. Verfahren nach einem der Ansprüche 1 bis 10, **dadurch gekennzeichnet, dass** als Trag-, Deck- oder Verschleißschicht (7) des Straßenaufbaus Asphalt aufgebracht wird.

12. Verfahren nach einem der Ansprüche 1 bis 11, **dadurch gekennzeichnet, dass** die Bitumenemulsion bzw. die Bitumen-Latex-Emulsion (6) in Mengen von 600 - 1000 gr/m², insbesondere 750 - 850 gr/m² vorzugsweise durch Aufspritzen im Hochdruckverfahren aufgebracht wird.

## Claims

1. A method for producing a sealing for roadways, e.g. on bridges, for the subsequent application of a base course, top course or wearing course (7) of a road structure, in which the roadway is primed (2) and optionally sprinkled with quartz sand, whereupon a spray elastomer coating (3) is sprayed on, an adhesive primer (4) is subsequently applied, and the latter is sprinkled with plastic granules (5) over the whole surface, **characterized in that** an epoxy resin is used as said adhesive primer (4), and that a bitumen emulsion or a bitumen-latex emulsion (6) is applied on the plastic granules (5).

2. A method according to claim 1, **characterized in that** a polyurea or polyurea hybrid spray coating is used as said spray elastomer coating (3).

3. A method according to claim 1 or 2, **characterized in that** the primer (2) comprises an epoxy resin or polyaspartic, preferably in an amount ranging from 500 to 800 g/m².

4. A method according to claim 2 or 3, **characterized in that** the polyurea or polyurea hybrid spray coating (3) is applied in a layer thickness of 2 to 3 mm.

5. A method according to claim 2, 3 or 4, **characterized in that** the polyurea or polyurea hybrid spray coating (3) is applied in an amount ranging from 2.5 to 3 kg/m².

6. A method according to any one of claims 2 to 5, **characterized in that** the application of the Polyurea or polyurea hybrid spray coating (3) is performed at 65 to 85°C and, in particular, by high-pressure spraying at 140 to 210 bar.

7. A method according to any one of claims 1 to 6, **characterized in that** the adhesive primer (4) is applied in an amount ranging from 400 to 500 g/m².

8. A method according to any one of claims 1 to 7, **characterized in that** extruded polyolefins are used as said plastic granules (5), preferably in amounts ranging from 600 to 1000 g/m².

9. A method according to any one of claims 1 to 8, **characterized in that** the plastic granules (5) have a softening temperature ranging from 125 to 140°C.

10. A method according to any one of claims 1 to 9, **characterized in that** the plastic granules (5) have diameters of 3 to 6 mm.

11. A method according to any one of claims 1 to 10, **characterized in that** asphalt is applied as said base course, top course or wearing course (7) of the road structure.

12. A method according to any one of claims 1 to 11, **characterized in that** the bitumen emulsion or bitumen-latex emulsion (6) is applied in amounts ranging from 600 to 1000 g/m², in particular 750 to 850 g/m², preferably by high-pressure spraying.

## Revendications

1. Procédé pour réaliser une étanchéité des chaussées, par exemple sur des ponts, pour l'application consécutive d'une couche de support, de recouvrement ou d'usure (7) d'une structure routière sur laquelle la couche de base de la chaussée est posée (2) et éventuellement sablée avec du sable de quartz, après quoi un revêtement en élastomère pulvérisé (3) est injecté, ensuite une couche de liaison (4) est appliquée et celle-ci est complètement sablée avec un granulat de matière plastique (5), **caractérisé en ce que** l'on utilise comme couche de liaison (4), une résine époxy et **en ce que** sur le granulat de matière plastique (5) est appliquée une émulsion de bitume ou une émulsion de bitume - latex (6).

2. Procédé selon la revendication 1, **caractérisé en ce que** l'on utilise comme revêtement en élastomère pulvérisé (3) un revêtement de polyurée ou hybride de polyurée pulvérisé.

3. Procédé selon la revendication 1 ou 2, **caractérisé en ce que** la couche de base (2) comprend une résine époxy ou un polyasparte, de préférence, en une quantité de 500 à 800 g/m².

4. Procédé selon la revendication 2 ou 3, **caractérisé en ce que** le revêtement de polyurée ou d'hybride de polyurée (3) pulvérisé est appliqué en une épaisseur de couche de 2 à 3 mm.

5. Procédé selon la revendication 2, 3 ou 4, **caractérisé en ce que** le revêtement de polyurée ou d'hybride de polyurée pulvérisé (3) est appliqué en une quantité de 2,8 à 3 kg/m².

6. Procédé selon l'une des revendications 2 à 5, **caractérisé en ce que** l'application du revêtement de polyurée ou d'hybride de polyurée pulvérisé (3) s'effectue à 65 à 85 °C et en particulier au moyen d'un procédé de pulvérisation à haute pression à 140 à 210 bars.

7. Procédé selon l'une des revendications 1 à 6, **caractérisé en ce que** la couche de liaison (4) est appliquée en une quantité de 400 à 500 g/m².

8. Procédé selon l'une des revendications 1 à 7, **caractérisé en ce que** l'on utilise des polyoléfines extrudées sous la forme de granulat de matière plastique (5), de préférence en quantités de 600 à 1000 g/m².

9. Procédé selon la revendication 1 à 8, **caractérisé en ce que** les granulats de matière plastique (5) présentent une température de ramollissement de 125 à 140 °C.

10. Procédé selon l'une des revendications 1 à 9, **caractérisé en ce que** les granulés de matière plastique (5) présentent un diamètre de 3 à 6 mm.

11. Procédé selon l'une des revendications 1 à 10, **caractérisé en ce que** de l'asphalte est appliqué comme couche de support, de recouvrement ou d'usure (7) de la structure routière.

12. Procédé selon l'une des revendications 1 à 11, **caractérisé en ce que** l'émulsion de bitume ou l'émulsion de bitume - latex (6) est appliquée en quantités de 600 à 1000 g/m², en particulier de 750 à 850 g/m², de préférence par injection dans le procédé à haute pression.
